# DEMANDE DE BREVET EUROPEEN

(11) **EP 2 365 467 A1**
(43) Date de publication de la demande: **14.09.2011**
(21) Numéro de dépôt: 11155655.1
(22) Date de dépôt: 23.02.2011
(51) Int. Cl.: G06Q 10/00, H04L 29/12

(54) **Procédé de création de lien entre identifiants de contact appartenant à un utilisateur relativement à un ou plusieurs outils de communication interpersonnelle**

(30) Priorité: 10.03.2010 FR 1051737
(71) Demandeur: France Telecom, 75015 Paris (FR)
(72) Inventeur: Clec'h, Armelle, 22300, LANNION (FR); Clavier, Eric, 22560, TREBEURDEN (FR)

(57) **Abrégé**

L'invention se rapporte à un procédé de création de lien entre identifiants de contact inclus dans au moins une liste de contacts (L21,L22) d'un utilisateur stockée dans un dispositif de traitement de données (MOB2), un identifiant de contact étant apte à identifier un contact avec lequel l'utilisateur est susceptible d'entrer en relation via le dispositif. Le procédé comprend les étapes suivantes :
- une première étape de déclaration de lien au cours de laquelle un premier utilisateur d'un premier dispositif de traitement de données (MOB1) déclare au moins un lien entre identifiants de contact, suivi d'une étape de stockage dudit au moins un lien déclaré,
- une deuxième étape de création de lien au cours de laquelle ledit au moins un lien déclaré est reproduit entre identifiants de contact d'un deuxième utilisateur possédant les identifiants liés parmi ses identifiants de contact (L31,L32).

## Description

### Domaine technique

L'invention se rapporte à un procédé de création de lien entre identifiants de contact appartenant à un utilisateur relativement à un ou plusieurs outils de communication interpersonnelle.

L'outil de communication est indifféremment une messagerie instantanée, un réseau social, un service de gestion d'un carnet d'adresse, et plus généralement tout outil de communication interpersonnelle apte à permettre une communication entre personnes utilisateurs de l'outil.

La communication entre contacts est possible grâce à des dispositifs de traitement de données tels qu'un ordinateur personnel, un radiotéléphone, etc., reliés entre eux par l'intermédiaire d'un réseau de communication. Ces dispositifs sont équipés d'au moins un processeur et d'au moins une mémoire dans laquelle sont stockés les contacts sous forme de liste de contacts.

Le réseau de communication en question est quelconque, par exemple un réseau Internet, un réseau de télécommunication tel que le réseau GSM, UMTS, etc.

### Etat de la technique

Précisons ici qu'un identifiant de contact est une suite de caractères représentative d'un nom d'usager ou d'un alias.

On constate aujourd'hui que chaque utilisateur d'outils de communication interpersonnelle gère une liste de contacts par outil de communication. Les inventeurs ont d'ailleurs constaté qu'il n'existait aucun lien entre outils de communications, notamment entre identifiants de contact utilisés relativement à différents outils de communication. Ainsi, un même utilisateur peut utiliser plusieurs identifiants pour communiquer via des outils de communication respectifs. Ainsi, deux listes de contacts distincts appartenant à un même premier utilisateur peuvent contenir des identifiants de contact respectifs différents désignant un même deuxième utilisateur sans que le premier utilisateur à qui appartiennent les listes ne s'en aperçoive.

Une solution qui permettrait une création d'un lien entre identifiants de contact que possède un utilisateur consisterait à interroger tout ou partie des contacts en leur demandant de fournir les identifiants utilisés et l'outil de communication utilisé correspondant. Le temps qu'un utilisateur consacrerait à cela nécessiterait un coût en temps considérable.

L'invention vient améliorer la situation.

### L'invention

A cet effet, l'invention a pour objet un procédé de création de lien entre identifiants de contact inclus dans au moins une liste de contacts d'un utilisateur stockée dans un dispositif de traitement de données, un identifiant de contact étant apte à identifier un contact avec lequel l'utilisateur est susceptible d'entrer en relation via le dispositif, caractérisé que le procédé comprend les étapes suivantes :
- une première étape de déclaration de lien au cours de laquelle un premier utilisateur d'un premier dispositif de traitement de données déclare au moins un lien entre identifiants de contact, suivi d'une étape de stockage dudit au moins un lien déclaré,
- une deuxième étape de création de lien au cours de laquelle ledit au moins un lien déclaré est reproduit entre identifiants de contact d'un deuxième utilisateur possédant les identifiants liés parmi ses identifiants de contact.

Ainsi, un lien déclaré relativement à des identifiants de contacts que possède un utilisateur est reproduit automatiquement dans d'autres listes appartenant à d'autres utilisateurs lorsque les listes en question incluent des identifiants liés déclarés lors de la première étape de déclaration. Le coût en temps consacré à la création d'un lien entre deux identifiants de contact sur un ensemble des dispositifs se limite donc, au mieux, à la déclaration du lien par un seul utilisateur, la reproduction du lien étant quant à elle automatique. Le temps consacré à la création de liens est donc largement réduit par rapport à l'état de la technique.

Le procédé de l'invention est d'autant plus utile lorsque les identifiants de contact appartiennent à des listes de contact respectives relatives à des outils de communication interpersonnelle car un utilisateur utilise rarement plusieurs identifiants pour un même outil de communication.

Selon un aspect matériel, l'invention a trait à un système informatique comprenant une pluralité de dispositifs de traitement de données aptes à stocker des listes de contacts incluant des identifiants de contacts, caractérisé en ce qu'au moins un dispositif comprend
- Des moyens de déclaration de lien entre identifiants aptes à déclarer un lien entre identifiants de contact,
   Le système comprenant en outre
- Des moyens de stockage aptes à stocker le lien déclaré,
- Des moyens de création de lien aptes à créer un lien en reproduisant le lien déclaré entre identifiants de contact d'un deuxième utilisateur possédant des identifiants liés parmi ses identifiants de contact.

Selon un autre aspect matériel, l'invention a trait à un dispositif de traitement de données apte à stocker des identifiants de contact avec lesquels un utilisateur du dispositif est susceptible de communiquer via un réseau de communication, caractérisé en ce qu'il comprend
- Des moyens de réception de listes de contact d'un utilisateur
- Des moyens d'accès à une mémoire stockant au moins un lien déclaré entre identifiants
- Des moyens de recherche, parmi les identifiants de contact d'un utilisateur, d'identifiants liés déclarés et des moyens de demande de création de lien aptes à requérir un lien si les identifiants liés font partie des identifiants de contact d'un utilisateur.

Selon un autre aspect matériel, l'invention a trait à un dispositif de traitement de données apte à stocker des identifiants de contact avec lesquels un utilisateur du dispositif est susceptible de communiquer via un réseau de communication, caractérisé en ce qu'il comprend
- Des moyens de réception d'une déclaration d'un lien entre identifiants de contact,
- Des moyens de demande de stockage du lien créé entre identifiants.

Selon un autre aspect matériel, l'invention a trait à un dispositif de traitement de données apte à stocker des identifiants de contact avec lesquels un utilisateur du dispositif est susceptible de communiquer via un réseau de communication, caractérisé en ce qu'il comprend
- Des moyens d'obtention d'un lien entre identifiants de contact
- Des moyens de stockage du lien obtenu
- Des moyens de restitution dudit lien entre identifiants.

L'invention a trait aussi à des programmes d'ordinateur.

Un premier programme d'ordinateur est apte à être mis en oeuvre sur un dispositif de traitement de données, le programme comprenant des instructions de code qui, lorsqu'il est exécuté par un processeur réalise les étapes suivantes :
- Une étape de réception d'une déclaration d'un lien entre identifiants de contact,
- Une étape de demande de stockage du lien créé entre identifiants.

Un deuxième programme est apte à être mis en oeuvre sur un dispositif de traitement de données, le deuxième programme comprenant des instructions de code qui, lorsqu'il est exécuté par un processeur réalise les étapes suivantes :
- Une étape de réception de listes de contact d'un utilisateur
- Une étape d'accès à une mémoire stockant au moins un lien déclaré entre identifiants
- Une étape de recherche des identifiants liés parmi les identifiants de contact d'un utilisateur et des moyens de demande de création de lien aptes à requérir un lien si les identifiants liés font partie des identifiants de contact d'un utilisateur

Un troisième programme d'ordinateur apte à être mis en oeuvre sur un dispositif de traitement de données, ce troisième programme comprenant des instructions de code qui lorsqu'il est exécuté par un processeur réalise les étapes suivantes :
- Une étape d'obtention d'un lien entre identifiants de contact
- Une étape de stockage du lien obtenu
- Une étape de restitution dudit lien entre identifiants.

L'invention sera mieux comprise à la lecture de la description qui suit, donnée à titre d'exemple et faite en référence aux dessins annexés.

### Les figures:

La figure 1 est une vue d'un système informatique ilustrant un exemple de réalisation de l'invention.
La figure 2 représente un échange de données entre dispositifs de traitement de données pour la réalisation du procédé de l'invention.

### Description détaillée d'un exemple de réalisation illustrant l'invention

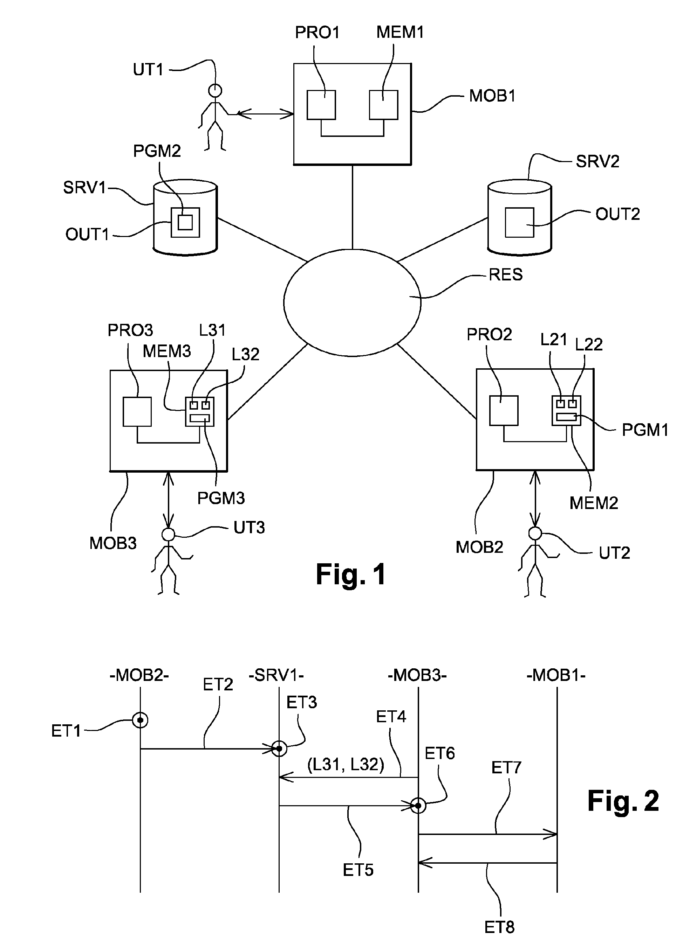

La figure 1 représente un système SYS comprenant des dispositifs de traitement de données connectés entre eux via un réseau de communication RES.

Rappelons qu'un dispositif de traitement de données comprend au moins un processeur et au moins une mémoire.

Le réseau est quelconque ; dans notre exemple, le réseau choisi pour illustrer l'invention est le réseau Internet.

Dans notre exemple, le système SYS comprend trois dispositifs illustrés par des radiotéléphones désignés par la suite par le terme téléphone, à savoir un premier téléphone MOB1, une deuxième téléphone MOB2 et un troisième téléphone MOB3.

Dans notre exemple, le premier téléphone MOB1 comprend un processeur PRO1, dit premier processeur, relié à une mémoire MEM1, dite première mémoire, par l'intermédiaire d'un bus BUS1, dit premier bus. Dans notre exemple, le deuxième téléphone MOB 2 comprend un processeur PRO2, dit deuxième processeur, relié à une mémoire MEM2, dite deuxième mémoire, par l'intermédiaire d'un bus BUS2, dit deuxième bus. Le troisième téléphone MOB 3 comprend un processeur PR03, dit troisième processeur, relié à une mémoire MEM3, dite troisième mémoire, par l'intermédiaire d'un bus BUS3, dit troisième bus.

Les trois téléphones incluent une interface d'entrées/sorties respective (non représentée) permettant d'assurer une communication entre le processeur concerné et un clavier, un moniteur ou afficheur, une imprimante, un modem pour communiquer via le réseau de communication RES.

Les trois téléphones décrits ci-dessus appartiennent à trois utilisateurs respectifs, à savoir un premier utilisateur UT1, un deuxième utilisateur UT2, et un troisième utilisateur UT3, respectivement. Ces trois utilisateurs peuvent interagir avec leur téléphone respectif au moyen d'une interface homme-machine, non représentée sur la figure 1, connue de l'homme du métier.

Dans notre exemple de réalisation, le système comprenant deux outils de communication interpersonnelle OUT1 et OUT2. Dans notre exemple, le premier outil est un réseau de télécommunication géré par un opérateur de télécommunication, et le deuxième outil OUT2 est un réseau social. Le premier outil gère des communications téléphoniques entre téléphones au travers d'un réseau de télécommunication de type GSM ou UMTS. Le deuxième outil gère des communications sur un réseau Internet.

Les ordinateurs sont équipés de programmes clients aptes à communiquer avec les outils OUT1 et OUT2 et aptes à permettre aux utilisateurs de communiquer avec des personnes utilisateurs du même outil.

A cet effet, pour simplifier la mise en relation entre téléphones, les outils offrent la possibilité de disposer de listes de contacts incluant des identifiants de contact permettant d'identifier des utilisateurs de l'outil de communication concerné. Chaque utilisateur possède ainsi une liste de contacts par outil de communication.

Nous supposons ici que les trois utilisateurs ont un compte relativement aux deux outils décrits ci-dessus.

En l'espèce, le premier utilisateur UT1 possède deux identifiants respectivement à savoir
- un numéro de téléphone pour communiquer via le réseau de télécommunication ; dans notre exemple le numéro est par exemple "0102030405".
- un identifiant "didi22" pour communiquer via le réseau social.

Le deuxième utilisateur UT2 et le troisième utilisateur UT3 possèdent deux listes de contacts respectives. Le deuxième utilisateur UT2 possède une liste de contact L21, dite première liste de contacts, illustrée par un carnet d'adresse incluant comme identifiant de contact
- "Didier Rugby" auquel est associé un numéro de téléphone 0102030405.

Le deuxième utilisateur UT2 possède aussi une liste de contact L22, dite deuxième liste, relativement au réseau social. Cette deuxième liste inclut "didi22" comme identifiant de contact.

Le troisième utilisateur UT3 possède une liste de contact L31, dite troisième liste L31, illustrée par un carnet d'adresse incluant un identifiant de contact "Didier Martin" auquel est associé un numéro de téléphone "0102030405".

Le troisième utilisateur UT3 possède aussi une liste de contact L32, dite quatrième liste, relativement au réseau social. Cette quatrième liste L32 inclut deux identifiants de contacts à savoir
- "didi22"
- et "Armelle".

Nous supposons ici que le deuxième utilisateur UT2 sait que l'identifiant de contact "Didier Rugby" et l'identifiant de contact "didi22" désignent le même utilisateur, à savoir le premier utilisateur UT1.

Les étapes du procédé sont illustrées à la figure 2. Le procédé comprend deux étapes à savoir
- une étape de déclaration de lien au cours de laquelle le deuxième utilisateur UT2 déclare le lien existant entre les identifiants de contact "Didier Rugby" et le contact "didi22",
- et une deuxième étape de création automatique de lien basée sur l'étape de déclaration.

Lors de la première étape ET1 de déclaration de lien, le deuxième UT2 utilisateur exécute un premier programme PGM1 stocké dans la deuxième mémoire MEM2 du deuxième téléphone MOB2. Ce premier programme PGM1 est apte à créer un lien et à requérir, lors d'une deuxième étape ET2, le stockage en mémoire du lien créé.

Lors d'une troisième étape ET3, dans notre exemple, les liens déclarés sont stockés sur le premier serveur SRV1.

Lors d'une quatrième étape ET4, le premier serveur SRV1 reçoit les différentes listes de contacts d'utilisateurs et détermine, pour un utilisateur donné, si les identifiants appartenant à cet utilisateur ont fait l'objet d'un lien déclaré lors de la première étape. Dans notre exemple, le premier serveur SRV1 reçoit par exemple les listes de contacts du troisième utilisateur à savoir les listes L31 et L32 décrites ci-dessus. Un deuxième programme PGM2, présent sur le serveur SRV1, est exécuté et recherche si parmi les identifiants de contact appartenant au troisième utilisateur il y a des identifiants qui ont fait l'objet d'un lien déclaré. Dans notre exemple, un lien a été déclaré entre "Didier Rugby" et "didi22" par le deuxième utilisateur UT2. Comme le troisième utilisateur possède ces deux identifiants dans ses listes de contacts, le deuxième programme PGM2 requiert la création du lien entre les identifiants des listes du troisième utilisateur UT3.

Dans notre exemple, une proposition de création de lien est transmise au troisième dispositif MOB3, lors d'une cinquième étape ET5, pour que le lien soit créé entre les identifiants concernés.

A ce stade les liens déclarés à la première étape sont aptes à être reproduits entre identifiants de contact du troisième utilisateur UT3.

Lors d'une sixième étape ET6, le troisième processeur PRO3 reçoit une demande création de lien entre les identifiants "Didier martin" et "didi22".

Ensuite, un troisième programme PGM3, présent dans la troisième mémoire MEM3 est exécuté par le troisième processeur PRO3, s'exécute et réalise les étapes suivantes :
- Une étape d'obtention depuis le premier serveur SRV1 du lien et des identifiants de contact concernés,
- Une étape de stockage du lien ainsi obtenu dans la troisième mémoire MEM3,
- et une étape de restitution dudit lien entre identifiants par le troisième processeur PRO3.

En l'espèce, dans notre exemple, le lien créé est stocké dans la troisième mémoire MEM3, et peut être restitué par exemple sur l'écran du troisième téléphone.

Dans notre exemple de réalisation, le lien est affiché dans le carnet d'adresse L31 relatif au premier outil OUT1. Dans cet exemple, le carnet d'adresse comprend le nom "Didier Martin", le numéro de téléphone "0102030405" et, grâce à l'invention, l'information indiquant que ce contact utilise l'identifiant de contact "didi22" sur le réseau social OUT2 (référence didi22/OUT2 sur la figure 2).

Le procédé décrit ci-dessus peut faire l'objet de multiples variantes.

Selon une première variante, à la première étape ET1, la déclaration peut provenir d'un autre utilisateur que le deuxième utilisateur UT2, par exemple le premier utilisateur UT1.

Selon une deuxième variante du procédé décrit ci-dessus, dans notre exemple, la demande de création est subordonnée à l'acceptation du troisième utilisateur UT3. En effet, un même outil de communication interpersonnel peut inclure plusieurs identifiants identiques, et la probabilité que le lien proposé ne corresponde pas à un véritable lien entre les identifiants concernés n'est pas négligeable. Une proposition préalable à la création de lien évite ainsi une création de lien erronée.

Selon une troisième variante, lorsque le troisième utilisateur UT3 reçoit la proposition, le procédé comprend une septième étape ET7 optionnelle, étape au cours de laquelle le troisième utilisateur UT3 interroge l'utilisateur associé aux identifiants pour lesquels il a reçu une proposition de lien. L'utilisateur en question répond lors d'une huitième étape ET8 ; S'il confirme posséder ces identifiants pour la communication relativement aux deux outils, respectivement, le troisième utilisateur UT3 peut alors valider la création du lien dans son carnet d'adresse tout en étant sûr de la véracité du lien créé.

Dans l'exemple de réalisation décrit ci-dessus, le lien est restitué dans le carnet d'adresse. Cependant, l'invention ne se limite pas à cet exemple, la restitution peut être réalisée autrement. Par exemple, selon une quatrième variante, le lien, au lieu d'être restitué dans le carnet d'adresse, peut être restitué dans la liste relative au réseau social. Ainsi, dans la liste de contact L32 du troisième utilisateur UT3 utilisée relativement au réseau social, à l'identifiant "didi22" est par exemple associé l'information indiquant que "didi22" correspond à "Didier Martin" dans le carnet d'adresse. Le lien peut aussi être restitué dans un document distinct des listes de contacts.

On a vu précédemment que, lors de la quatrième étape ET4, un deuxième programme PGM2 présent sur le premier serveur, reçoit les différentes listes de contacts d'utilisateurs. Cette quatrième étape ne suit pas forcément la troisième étape. En effet, le l'instant de réception d'une liste par le serveur est sans importance pour la réalisation du procédé de l'invention.

On a vu aussi dans l'exemple décrit ci-dessus, que lors de la quatrième étape ET4, le premier serveur SRV1 reçoit les différentes listes de contacts d'utilisateurs et détermine, pour un utilisateur donné, si les identifiants appartenant à cet utilisateur ont fait l'objet d'un lien déclaré lors de la première étape. Selon une cinquième variante, un téléphone comprend des moyens de réception de liens déclarés à la première étape ET1. De plus le deuxième programme au lieu d'être stocké sur le premier serveur est stocké sur le téléphone. Ainsi, dans notre exemple, le troisième téléphone reçoit dans un premier temps des liens déclarés ; le troisième processeur PRO3 exécute ensuite le deuxième programme et recherche si parmi les identifiants de contact appartenant au troisième utilisateur s'il y des identifiants qui ont fait l'objet d'un lien déclaré. Dans notre exemple, un lien a été déclaré entre "Didier Rugby" et "didi22" par le deuxième utilisateur UT2. Comme le troisième utilisateur possède ces deux identifiants dans ses listes de contacts, le deuxième programme PGM2 requiert la création du lien entre les identifiants des listes du troisième utilisateur UT3.

A noter que la cinquième variante ne nécessite pas de stockage de liens à la deuxième étape.

Selon une sixième variante, variante à utiliser seule ou en combinaison avec la deuxième variante, le dispositif peut subordonner la création de lien dans le carnet d'adresses du troisième utilisateur UT3 au fait qu'il existe une relation entre le deuxième utilisateur UT2 et le troisième utilisateur UT3 au niveau de leurs carnets d'adresses. Il existe une relation par exemple lorsque :
- le troisième utilisateur UT3 fait partie du carnet d'adresses du deuxième utilisateur UT2, ou
- le deuxième utilisateur UT2 fait partie du carnet d'adresses du troisième utilisateur UT3, ou
- le deuxième utilisateur UT2 et le troisième utilisateur UT3 font parties du carnet d'adresse du troisième utilisateur UT3 et du deuxième utilisateur UT2, respectivement.

On a vu aussi que de l'invention comprend une première étape de déclaration de lien au cours de laquelle un premier utilisateur d'un premier dispositif de traitement de données déclare au moins un lien entre identifiants de contact, suivi d'une étape de stockage dudit au moins un lien déclaré. Précisons ici que cette première étape peut être réalisée par une pluralité de premiers utilisateurs déclarant chacun des liens entre identifiants de contacts appartenant à leurs propres listes de contacts.

Aussi, on a vu que le procédé comprend une deuxième étape de création de lien au cours de laquelle ledit au moins un lien déclaré est reproduit entre identifiants de contact d'un deuxième utilisateur possédant les identifiants liés parmi ses identifiants de contact. Cette deuxième étape peut naturellement, comme pour la première, être réalisée pour une pluralité de deuxièmes utilisateurs.

## Revendications

1. Procédé de création de lien entre identifiants de contact inclus dans au moins une liste de contacts (L21,L22) d'un utilisateur stockée dans un dispositif de traitement de données (MOB2), un identifiant de contact étant apte à identifier un contact avec lequel l'utilisateur est susceptible d'entrer en relation via le dispositif, caractérisé que le procédé comprend les étapes suivantes :
a. une première étape de déclaration de lien au cours de laquelle un premier utilisateur d'un premier dispositif de traitement de données (MOB1) déclare au moins un lien entre identifiants de contact, suivi d'une étape de stockage dudit au moins un lien déclaré,
b. une deuxième étape de création de lien au cours de laquelle ledit au moins un lien déclaré est reproduit entre identifiants de contact d'un deuxième utilisateur possédant les identifiants liés parmi ses identifiants de contact (L31,L32).

2. Système informatique (SYS) comprenant une pluralité de dispositifs de traitement de données (MOB2,MOB3) aptes à stocker des listes de contacts (L21,L22,L31,L32) incluant des identifiants de contacts, **caractérisé en ce qu'**au moins un dispositif comprend
a. Des moyens de déclaration de lien entre identifiants aptes à déclarer un lien entre identifiants de contact,
le système (SYS) comprenant en outre
b. Des moyens de stockage aptes à stocker le lien déclaré,
c. Des moyens de création de lien aptes à créer un lien en reproduisant le lien déclaré entre identifiants de contact d'un deuxième utilisateur possédant des identifiants liés parmi ses identifiants de contact (L31,L32).

3. Dispositif de traitement de données (SRV1) apte à stocker des identifiants de contact avec lesquels un utilisateur du dispositif est susceptible de communiquer via un réseau de communication (RES), **caractérisé en ce qu'**il comprend
- Des moyens de réception de listes de contact d'un utilisateur
- Des moyens d'accès à une mémoire stockant au moins un lien déclaré entre identifiants
- Des moyens de recherche, parmi les identifiants de contact d'un utilisateur, d'identifiants liés déclarés et des moyens de demande de création de lien aptes à requérir un lien si les identifiants liés font partie des identifiants de contact d'un utilisateur.

4. Dispositif de traitement de données (MOB2) apte à stocker des identifiants de contact avec lesquels un utilisateur du dispositif est susceptible de communiquer via un réseau de communication (RES), **caractérisé en ce qu'**il comprend
- Des moyens de réception d'une déclaration d'un lien entre identifiants de contact,
- Des moyens de demande de stockage du lien créé entre identifiants.

5. Dispositif de traitement de données (MOB3) apte à stocker des identifiants de contact avec lesquels un utilisateur du dispositif est susceptible de communiquer via un réseau de communication (RES), **caractérisé en ce qu'**il comprend
- Des moyens d'obtention d'un lien entre identifiants de contact,
- Des moyens de stockage du lien obtenu,
- Des moyens de restitution dudit lien entre identifiants.

6. Programme d'ordinateur (PGM1) apte à être mis en oeuvre sur un dispositif de traitement de données (MOB2), le programme comprenant des instructions de code qui lorsque le programme est exécuté par un processeur réalise les étapes suivantes :
- Une étape de réception d'une déclaration d'un lien entre identifiants de contact,
- Une étape de demande de stockage du lien créé entre identifiants.

7. Programme d'ordinateur (PGM2) apte à être mis en oeuvre sur un dispositif de traitement de données (SRV1), le programme comprenant des instructions de code qui, lorsque le programme est exécuté par un processeur réalise les étapes suivantes :
- Une étape de réception de listes de contact d'un utilisateur
- Une étape d'accès à une mémoire stockant au moins un lien déclaré entre identifiants
- Une étape de recherche des identifiants liés parmi les identifiants de contact d'un utilisateur et des moyens de demande de création de lien aptes à requérir un lien si les identifiants liés font partie des identifiants de contact d'un utilisateur

8. Programme d'ordinateur (PGM3) apte à être mis en oeuvre sur un dispositif de traitement de données (MOB3), le programme comprenant des instructions de code qui lorsque le programme est exécuté par un processeur réalise les étapes suivantes :
- Une étape d'obtention d'un lien entre identifiants de contact
- Une étape de stockage du lien obtenu
- Une étape de restitution dudit lien entre identifiants.
